(19) **Europäisches Patentamt / European Patent Office / Office européen des brevets**

(11) **EP 4 727 002 A1**

(12) # EUROPEAN PATENT APPLICATION
published in accordance with Art. 153(4) EPC

(43) Date of publication:
**15.04.2026 Bulletin 2026/16**

(21) Application number: **24819078.7**

(22) Date of filing: **09.05.2024**

(51) International Patent Classification (IPC):
*H02P 21/20* $^{(2016.01)}$   *H02P 27/08* $^{(2006.01)}$

(52) Cooperative Patent Classification (CPC):
**H02P 21/20; H02P 27/08**

(86) International application number:
**PCT/JP2024/017261**

(87) International publication number:
**WO 2024/252841 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.06.2023 JP 2023094987**

(71) Applicant: **Astemo, Ltd.**
**Tokyo 100-0004 (JP)**

(72) Inventors:
• **SUMITA, Satoshi**
  **Tokyo 100-8280 (JP)**
• **SEKIGUCHI, Manabu**
  **Hitachinaka-shi, Ibaraki 312-8503 (JP)**
• **YAMADA, Yoshihisa**
  **Hitachinaka-shi, Ibaraki 312-8503 (JP)**
• **NAKATA, Yoshinori**
  **Hitachinaka-shi, Ibaraki 312-8503 (JP)**

(74) Representative: **MERH-IP Matias Erny Reichl Hoffmann**
**Patentanwälte PartG mbB**
**Paul-Heyse-Straße 29**
**80336 München (DE)**

(54) **CONTROL APPARATUS FOR ELECTRIC POWER CONVERSION DEVICE**

(57)     A controller for a power conversion device that drives an electric motor includes an arithmetic device, and the arithmetic device is configured to: calculate an output of the electric motor; calculate a loss change amount due to a temperature change of the electric motor; when a ratio of the loss change amount to the output of the electric motor is smaller than an allowable torque error ratio of the electric motor, set a first estimated torque value based on the output of the electric motor and on a rotation speed of the electric motor as an estimated torque value of the electric motor; and when otherwise, set a second estimated torque value based on a current of the electric motor and a rotor phase of the electric motor as the estimated torque value of the electric motor.

[FIG. 2]

**Description**

Technical Field

The present invention relates to a controller for a power conversion device.

Background Art

A controller is known that estimates torque of an electric motor by some method and controls the electric motor based on the estimated torque. For example, PTL 1 describes a controller for a permanent magnet synchronous electric motor. The controller is for an electric motor in which a low-speed torque estimation unit and a high-speed torque estimation unit are switched in accordance with an angular speed of the electric motor, and the controller switches torque estimation units that are respectively capable of satisfactorily estimating torque in a low-speed range and a high-speed range of an angular rotating speed of the electric motor.

Citation List

Patent Literature

PTL 1: JP 2002-233199 A

Summary of Invention

Technical Problem

The controller described in PTL 1 does not have a mechanism for suppressing, to an allowable value or less, a torque error ratio (a value obtained by dividing a difference between a torque command and a torque true value by the torque true value) due to an influence of temperature fluctuation, and it is necessary to determine conditions of selection of the torque estimation unit and switching of the torque estimation units, in a trial and error manner.

An object of the present invention is to provide a controller for a power conversion device capable of suppressing a torque error ratio due to an influence of temperature fluctuation to an allowable value or less.

Solution to Problem

A controller for a power conversion device according to one aspect of the present invention is a controller for a power conversion device that drives an electric motor, the controller including an arithmetic device that is configured to: calculate an output of the electric motor; calculate a loss change amount due to a temperature change of the electric motor; when a ratio of the loss change amount to the output of the electric motor is smaller than an allowable torque error ratio of the electric motor, set a first estimated torque value based on the output of the electric motor and on a rotation speed of the electric motor as an estimated torque value of the electric motor; and when otherwise, set a second estimated torque value based on a current of the electric motor and a rotor phase of the electric motor as the estimated torque value of the electric motor.

Advantageous Effects of Invention

With the present invention, it is possible to provide a controller for a power conversion device capable of suppressing a torque error ratio due to an influence of temperature fluctuation to an allowable value or less.

Brief Description of Drawings

[FIG. 1] FIG. 1 is a block diagram schematically illustrating a hardware configuration of a controller according to a first embodiment of the present invention.
[FIG. 2] FIG. 2 is a block diagram for describing an operation of the controller according to the first embodiment of the present invention.
[FIG. 3] FIG. 3 is a block diagram illustrating a configuration of a torque command correction unit.
[FIG. 4] FIG. 4 is an explanatory diagram for describing a content of correction, by a torque command correction unit, on a torque command.

[FIG. 5] FIG. 5 is a block diagram illustrating a configuration of a vector control unit.

[FIG. 6] FIG. 6 is a flowchart of control processing performed by the controller according to the first embodiment.

[FIG. 7] FIG. 7 is a schematic diagram illustrating an electric motor vehicle on which a controller according to a second embodiment is mounted.

Description of Embodiments

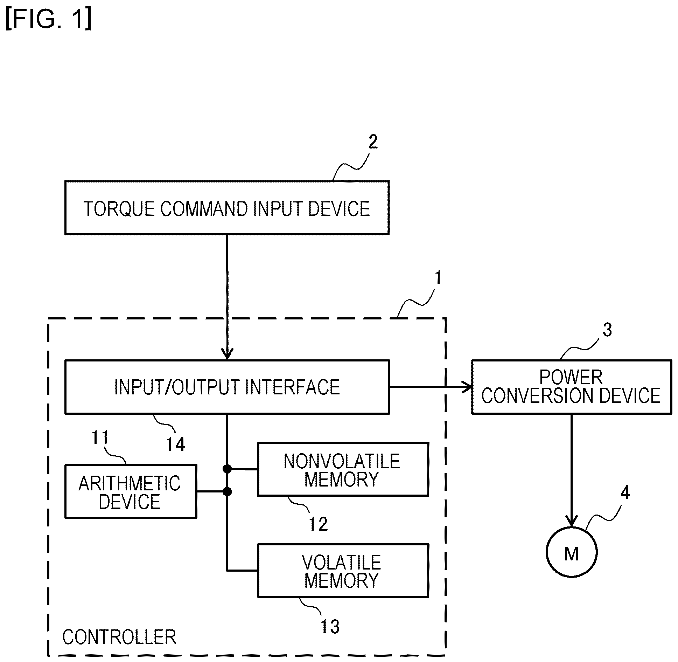

With reference to FIGS. 1 to 6, a controller 1 for a power conversion device 3 according to an embodiment of the present invention will be described.

FIG. 1 is a block diagram schematically illustrating a hardware configuration of the controller 1 according to a first embodiment of the present invention. The controller 1 is configured with a computer including: an arithmetic device 11 such as a central processing unit (CPU), a micro processing unit (MPU), or a digital signal processor (DSP); a nonvolatile memory 12 such as a read only memory (ROM), a flash memory, or a hard disk drive; a volatile memory 13 called as a so-called random access memory (RAM); an input/output interface 14; and other peripheral circuits. These pieces of hardware cause software to operate in cooperation, thereby implementing a plurality of functions. Note that the controller may be configured with one computer or may be configured with a plurality of computers. Furthermore, as the arithmetic device 11, it is possible to use an application specific integrated circuit (ASIC), a field programmable gate array (FPGA), or the like.

The nonvolatile memory 12 stores a program capable of executing various operations. That is, the nonvolatile memory 12 is a storage medium (storage device) from which a program for realizing functions of the present embodiment can be read. The volatile memory 13 is a storage medium (storage device) that temporarily stores a calculation result by the arithmetic device 11 and a signal that is input from the input/output interface 14. The arithmetic device 11 is a device that develops a program stored in the nonvolatile memory 12 in the volatile memory 13 and executes an arithmetic operation, and the arithmetic device 11 performs, according to the program, predetermined arithmetic processing on data taken in from the input/output interface 14, the nonvolatile memory 12, and the volatile memory 13.

The controller 1 is connected to a torque command input device 2 and the power conversion device 3. The torque command input device 2 is a device that uses the controller 1 to drive an electric motor 4 at a desired torque. The power conversion device 3 is a device that drives the electric motor 4. The torque command input device 2 outputs a torque command to be described later toward the controller 1. The controller 1 outputs a plurality of gate signals g to be described later to the power conversion device 3 based on the torque command that is input from the torque command input device 2. The power conversion device 3 drives the electric motor 4 based on the plurality of gate signals g that are input from the controller 1.

An input unit of the input/output interface 14 converts signals input from various devices (the torque command input device 2 and the like) into data that can be calculated by the arithmetic device 11. Furthermore, an output unit of the input/output interface 14 generates a signal to be output that corresponds to the calculation result obtained in the arithmetic device 11, and outputs the signal to various devices (the power conversion device 3 and the like).

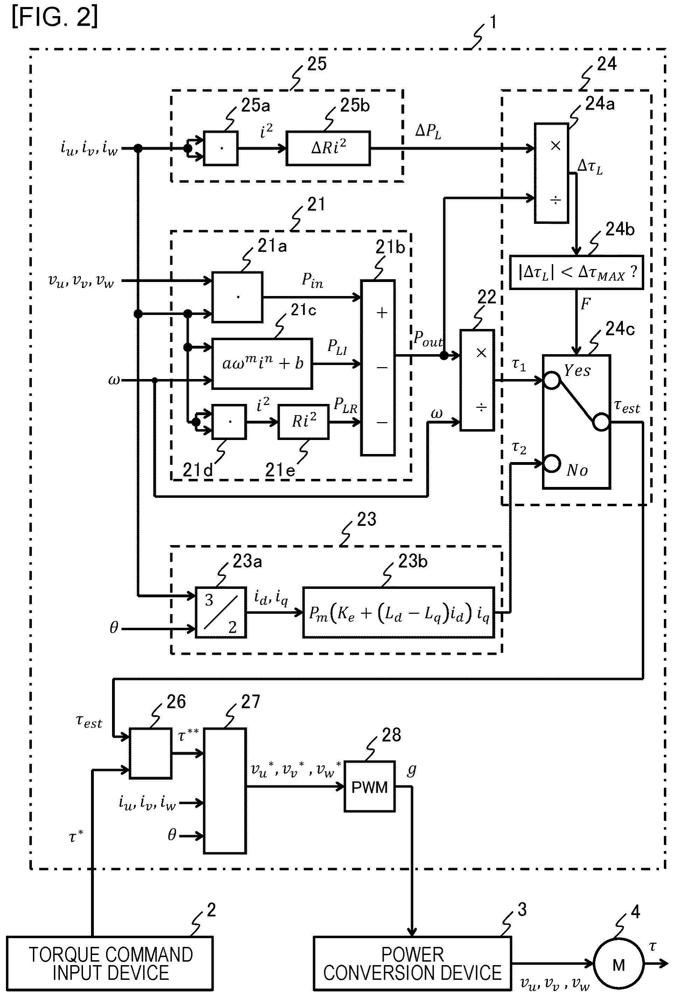

FIG. 2 is a block diagram for describing an operation of the controller 1 according to the first embodiment of the present invention. The controller 1 includes an electric motor output calculation unit 21, a first torque estimation unit 22, a second torque estimation unit 23, a switching unit 24, a loss change amount calculation unit 25, a torque command correction unit 26, a vector control unit 27, and a PWM control unit 28.

These units are supplied with U-phase, V-phase, and W-phase voltages $v_u$, $v_v$, and $v_w$ of the power conversion device 3, U-phase, V-phase, and W-phase currents $i_u$, $i_v$, and $i_w$ of the power conversion device 3, a frequency w of the electric motor 4, and a rotor phase $\theta$ of the electric motor 4. Regarding these values, values at the current time are acquired as needed from the power conversion device 3 and the electric motor 4 by sensors (not illustrated) or the like and are supplied to the respective units of the controller 1.

The electric motor output calculation unit 21 includes an inner product calculation unit 21a, an addition/subtraction unit 21b, a loss calculation unit 21c, an inner product calculation unit 21d, and a copper loss calculation unit 21e. The electric motor output calculation unit 21 calculates an output $P_{out}$ of the electric motor 4 based on the U-phase, V-phase, and W-phase voltages $v_u$, $v_v$, and $v_w$ of the power conversion device 3, on the U-phase, V-phase, and W-phase currents $i_u$, $i_v$, and $i_w$ of the power conversion device 3, and on the frequency $\omega$ of the electric motor 4.

The inner product calculation unit 21a calculates an input $P_{in}$ of the electric motor 4, which is an inner product of the U-phase, V-phase, and W-phase voltages $v_u$, $v_v$, and $v_w$ of the power conversion device 3 and the U-phase, V-phase, and W-phase currents $i_u$, $i_v$, and $i_w$ of the power conversion device 3. The loss calculation unit 21c calculates a loss $P_{Ll}$ represented by "$a\omega^m i^n + b$" using coefficients a and b. That is, the loss $P_{Ll}$ is a value obtained by adding an offset value b to a product of a power multiplier $i^n$ of the current of the electric motor 4 and a power multiplier $\omega^m$ of the frequency of the motor. Here, the loss $P_{Ll}$ is, for example, an eddy current loss or a hysteresis loss. According to the Steinmetz experimental formula, "m = 2 and n = 2" are used for the eddy current loss, and "m = 1 and n = 1.6" are used for the hysteresis loss. The coefficients a and b at this time are identified by, for example, calibration. As the loss $P_{LI}$, an AC copper loss, a machine loss, or the like is also considered, and in each case, the values a, b, m, and n are calibrated so as to minimize an error between "$a\omega^m i^n + b$" and an actually measured value. The calibration is performed as follows. For example, sensors capable of actually measuring losses are attached to the power conversion device 3, the electric motor 4, and the like; and, in such a state, the values a, b, m, and n with which a difference from the actually measured value becomes small are searched for by actually measuring the loss while changing the frequency $\omega$ of the electric motor 4 and the U-phase, V-phase, and W-phase currents $i_u$, $i_v$, and $i_w$ of the power conversion device 3.

Note that, only one loss "$a\omega^m i^n + b$" is presented in FIG. 2, a plurality of losses may be calculated in the same manner. Alternatively, the values a, b, m, and n may be calibrated such that an error between the total value of the losses and "$a\omega^m i^n + b$" is minimized. As a result, the electric motor output calculation unit 21 calculates as $P_{LI}$ some or all of the eddy current loss, the hysteresis loss, the AC copper loss, and the machine loss. The inner product calculation unit 21d calculates a square $i^2$ of the U-phase, V-phase, and W-phase currents $i_u$, $i_v$, and $i_w$, and the copper loss calculation unit 21e calculates a copper loss "$P_{LR} = Ri^2$". Here, the value R is a winding resistance value of the electric motor 4. The addition/subtraction unit 21b calculates the output $P_{out}$ of the electric motor 4 by the following Equation (1).

$$P_{out} \; = \; P_{in} \; - \; P_{LI} \; - \; P_{LR} ... (1)$$

Equation (1) holds since the gap between the input and output of the electric motor 4 is the loss of the electric motor 4.

The first torque estimation unit 22 calculates a first estimated torque value $\tau_1$ by the following Equation (2). That is, the first estimated torque value $\tau_1$ is a value obtained by dividing the output $P_{out}$ of the electric motor 4 by the frequency $\omega$ (rotation speed) of the electric motor 4.

$$\tau_1 \; = \; P_{out}/\omega ... (2)$$

Equation (2) holds since the output $P_{out}$ of the electric motor 4 is a product of the torque and the frequency.

The second torque estimation unit 23 includes a three-phase to two-phase conversion unit 23a and a torque model 3b. The second torque estimation unit 23 calculates a second estimated torque value $\tau_2$ from the U-phase, V-phase, and W-phase currents $i_u$, $i_v$, and $i_w$ of the power conversion device 3 and the rotor phase $\theta$ of the electric motor 4. The three-phase to two-phase conversion unit 23a converts the U-phase, V-phase, and W-phase currents $i_u$, $i_v$, and $i_w$ of the power conversion device 3 into d-axis and q-axis currents $i_d$ and $i_q$ by using the rotor phase $\theta$ of the electric motor 4. The second torque estimation unit 23 calculates the second estimated torque value $\tau_2$ by the torque model 3b expressed by the following Equation (3).

$$\tau_2 \; = \; P_m \; (K_e \; + \; (L_d \; - \; L_q) i_d) i_q ... (3)$$

Here, $P_m$ is a pole pair number, $K_e$ is an induced voltage coefficient, $L_d$ is a d-axis inductance, and $L_q$ is a q-axis inductance. That is, the second estimated torque value $\tau_2$ is a value calculated based on the d-axis and q-axis currents $i_d$ and $i_q$, on the inductances $L_d$ and $L_q$ of the electric motor 4, and on an induced voltage coefficient $K_e$ of the electric motor 4 after the U-phase, V-phase, and W-phase currents $i_u$, $i_v$, and $i_w$ (three-phase AC currents) of the electric motor 4 are converted into the d-axis and q-axis currents $i_d$ and $i_q$ from three phases to two phases by using the rotor phase $\theta$ of the electric motor 4.

The switching unit 24 includes a loss change amount ratio calculation unit 24a, a comparison unit 24b, and a switch 24c. The switching unit 24 outputs either the first estimated torque value $\tau_1$ or the second estimated torque value $\tau_2$ as an estimated torque value $\tau_{est}$. The loss change amount ratio calculation unit 24a calculates a ratio $\Delta\tau_L$ of the "loss change amount $\Delta P_L$ of the electric motor 4 at the time of temperature fluctuation" to the output $P_{out}$ of the electric motor 4. In the following description, the ratio $\Delta\tau_L$ is referred to as the ratio $\Delta\tau_L$ of the loss change amount.

The comparison unit 24b compares an absolute value $|\Delta\tau_L|$ of the ratio $\Delta\tau_L$ of the loss change amount with a predetermined allowable torque error ratio $\Delta\tau_{MAX}$, and when the absolute value $|\Delta\tau_L|$ is smaller, the comparison unit 24b sets a flag F to Yes and outputs the flag F, and when otherwise, the comparison unit 24b sets the flag F to No and outputs the flag F. The switch 24c outputs, as the estimated torque value $\tau_{est}$, the first estimated torque value $\tau_1$ when the flag F is Yes and the second estimated torque value $\tau_2$ when the flag F is No.

[0026] The loss change amount calculation unit 25 includes an inner product calculation unit 25a and a copper loss change amount calculation unit 25b. The loss change amount calculation unit 25 outputs a "loss change amount $\Delta P_L = \Delta R i^2$ of the electric motor 4 at the time of temperature fluctuation", where the fluctuation amount of the winding resistance value R at the time of temperature fluctuation (for example, when the temperature fluctuation from a minimum temperature to a maximum temperature in a specification of the electric motor 4) is a winding resistance fluctuation $\Delta R$. That is, the loss

change amount $\Delta P_L$ is the product of the change amount $\Delta R$ of the winding resistance value R due to a temperature change of the electric motor 4 and the square $i^2$ of the current of the electric motor 4. Note that regarding the winding resistance fluctuation $\Delta R$, a value measured or estimated in advance is stored in the nonvolatile memory 12 or the like and is read from the nonvolatile memory 12 or the like as necessary.

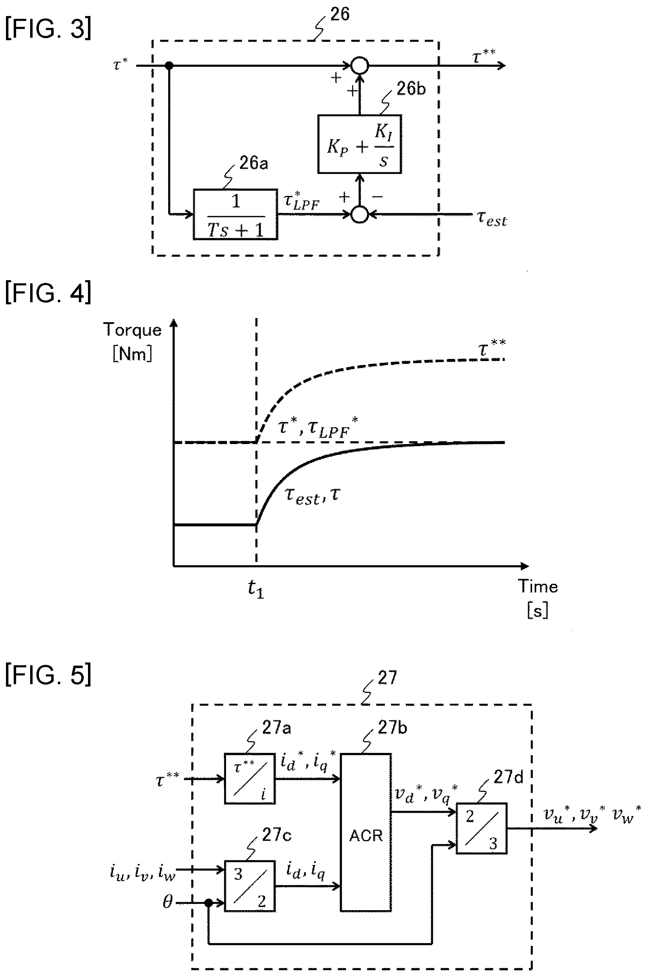

FIG. 3 is a block diagram illustrating a configuration of the torque command correction unit 26. The torque command correction unit 26 corrects a torque command $\tau^*$ based on the estimated torque value $\tau_{est}$ and outputs the corrected value as a corrected torque command $\tau^{**}$. The torque command correction unit 26 includes a low-pass filter 26a and a PI control unit 26b. The low-pass filter 26a having a time constant T simulates a response of torque control. Therefore, an output $\tau_{LPF}^*$ of the low-pass filter 26a represents an ideal torque response. The torque command correction unit 26 inputs a difference between the output $\tau_{LPF}^*$ of the low-pass filter 26a and the estimated torque value $\tau_{est}$ to the PI control unit 26b, adds an output of the PI control unit 26b to the torque command $\tau^*$, and outputs the torque command as the corrected torque command $\tau^{**}$. That is, the corrected torque command $\tau^{**}$ is determined by two-degree-of-freedom control in which the estimated torque value $\tau_{est}$ is used as feedback and the torque command $\tau^*$ is used as feedforward.

FIG. 4 is an explanatory diagram for describing a content of correction, by the torque command correction unit 26, on a torque command $\tau^*$. In FIG. 4, the horizontal axis represents time, and the vertical axis represents torque value. For the sake of explanation, it is assumed that the torque command correction unit 26 is disabled until time $t_1$ illustrated in FIG. 4, and the torque command correction unit 26 is enabled at time $t_1$ and after that. In addition, it is assumed that the torque command $\tau^*$ is constant over the entire time axis illustrated in FIG. 4.

In FIG. 4, the estimated torque value $\tau_{est}$ (and an actual torque $\tau$ of the electric motor 4) is depicted by a solid line, and the corrected torque command $\tau^{**}$ is depicted by a broken line. As described above, since the torque command correction unit 26 is disabled until time $t_1$, the torque command $\tau^*$ and the corrected torque command $\tau^{**}$ match until time $t_1$. When the torque command correction unit 26 is enabled at time $t_1$, the output $\tau_{LPF}^*$ of the low-pass filter 26a is larger than the estimated torque value $\tau_{est}$, so that the output of the PI control unit 26b becomes positive, and the corrected torque command $\tau^{**}$ increases. As a result, the actual torque $\tau$ and the estimated torque value $\tau_{est}$ also increase, and this continues until a torque error ratio $\Delta\tau$ in the following Equation (4) becomes zero.

$$\Delta\tau \;=\; (\tau \,-\, \tau^*)/\tau^* \ldots (4)$$

Therefore, unless there is an error in the torque estimation, the torque error ratio $\Delta\tau$ becomes eventually stabilized at zero by the correction by the torque command correction unit 26.

FIG. 5 is a block diagram illustrating a configuration of the vector control unit 27. The vector control unit 27 calculates U-phase, V-phase, and W-phase voltage commands $v_u^*$, $v_v^*$, and $v_w^*$ based on the corrected torque command $\tau^{**}$, on the U-phase, V-phase, and W-phase currents $i_u$, $i_v$, and $i_w$ of the power conversion device 3, and on the rotor phase $\theta$ of the electric motor 4. The vector control unit 27 includes a torque-to-current command conversion unit 27a, a current control unit 27b, a three-phase to two-phase conversion unit 27c, and a two-phase to three-phase conversion unit 27d.

The torque-to-current command conversion unit 27a converts the corrected torque command $\tau^{**}$ into d-axis and q-axis current commands $i_d^*$ and $i_q^*$. The three-phase to two-phase conversion unit 27c converts the U-phase, V-phase, and W-phase currents $i_u$, $i_v$, and $i_w$ of the power conversion device 3 into the d-axis and q-axis currents $i_d$ and $i_q$ by using the rotor phase $\theta$ of the electric motor 4. The current control unit 27b calculates d-axis and q-axis voltage commands $v_d^*$ and $v_q^*$ based on the d-axis and q-axis current commands $i_d^*$ and $i_q^*$ and the d-axis and q-axis currents $i_d$ and $i_q$. The two-phase to three-phase conversion unit 27d converts the d-axis and q-axis voltage commands $v_d^*$ and $v_q^*$ into U-phase, V-phase, and W-phase voltage commands $v_u^*$, $v_v^*$, and $v_w^*$ by using the rotor phase $\theta$ of electric motor 4.

The PWM control unit 28 outputs the plurality of gate signals g (that is, PWM control signal) to the power conversion device 3 based on the U-phase, V-phase, and W-phase voltage commands $v_u^*$, $v_v^*$, and $v_w^*$, thereby controlling the power conversion device 3. As a result, the U-phase, V-phase, and W-phase voltages $v_u$, $v_v$, and $v_w$ are applied to the electric motor 4, and the U-phase, V-phase, and W-phase currents $i_u$, $i_v$, and $i_w$ flow, whereby the actual torque $\tau$ is generated.

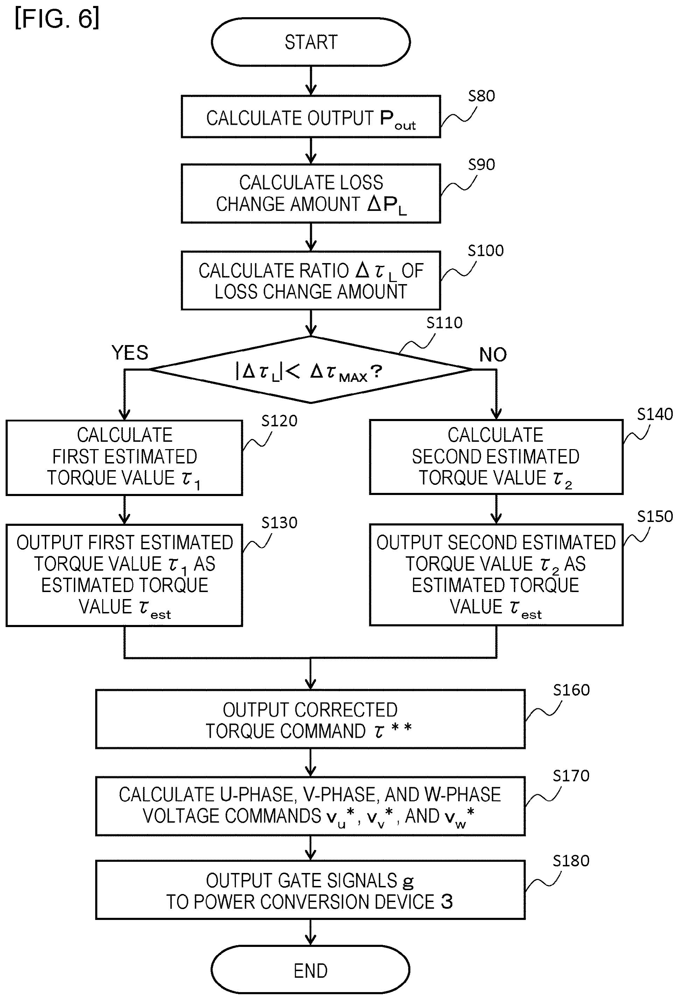

FIG. 6 is a flowchart of control processing performed by the controller 1 according to the first embodiment. In step S80, the electric motor output calculation unit 21 calculates the output $P_{out}$ of the electric motor 4 based on the U-phase, V-phase, and W-phase voltages $v_u$, $v_v$, and $v_w$ of the power conversion device 3, on the U-phase, V-phase, and W-phase currents $i_u$, $i_v$, and $i_w$ of the power conversion device 3, and on the frequency $\omega$ of the electric motor 4. In step S90, the loss change amount calculation unit 25 calculates the loss change amount $\Delta P_L$ of the electric motor 4 at the time of temperature fluctuation. In step S100, the switching unit 24 calculates the ratio $\Delta\tau_L$ of the loss change amount by using the output $P_{out}$ of the electric motor 4 calculated in step S80 and the loss change amount $\Delta P_L$ of the electric motor 4 at the time of temperature fluctuation calculated in step S90. In step S110, the switching unit 24 compares the absolute value $|\Delta\tau_L|$ of the ratio $\Delta\tau_L$ of the loss change amount calculated in step S100 with the predetermined allowable torque error ratio $\Delta\tau_{MAX}$, and determines whether the former is smaller than the latter. When the absolute value $|\Delta\tau_L|$ is smaller than the allowable torque error ratio $\Delta\tau_{MAX}$, the process proceeds to step S120.

In step S120, the first torque estimation unit 22 calculates the first estimated torque value $\tau_1$ by the above-described Equation (2). In step S130, the switching unit 24 outputs, as the estimated torque value $\tau_{est}$, the first estimated torque value $\tau_1$ calculated in step S120. Thereafter, the process proceeds to step S160.

On the other hand, in a case where the absolute value $|\Delta\tau_L|$ is equal to or larger than the allowable torque error ratio $\Delta\tau_{MAX}$ in step S110, the process proceeds to step S140. In step S140, the second torque estimation unit 23 calculates the second estimated torque value $\tau_2$ by the above-described Equation (3). In step S150, the switching unit 24 outputs, as the estimated torque value $\tau_{est}$, the second estimated torque value $\tau_2$ calculated in step S140. Thereafter, the process proceeds to step S160.

In step S160, the torque command correction unit 26 corrects the torque command $\tau^*$ based on the estimated torque value $\tau_{est}$ that is output in step S120 or step S140, and outputs the corrected value as the corrected torque command $\tau^{**}$. In step S170, the vector control unit 27 calculates the U-phase, V-phase, and W-phase voltage commands $v_u^*$, $v_v^*$, and $v_w^*$ based on the corrected torque command $\tau^{**}$ output in step S160, on the U-phase, V-phase, and W-phase currents $i_u$, $i_v$, and $i_w$ of the power conversion device 3, and on the rotor phase $\theta$ of the electric motor 4. In step S180, the PWM control unit 28 outputs the plurality of gate signals g to the power conversion device 3 based on the U-phase, V-phase, and W-phase voltage commands $v_u^*$, $v_v^*$, and $v_w^*$ calculated in step S170, thereby controlling the power conversion device 3.

As described above, if there is no error in the torque estimation, the torque error ratio $\Delta\tau$ is eventually made to be zero by the torque command correction unit 26. Since the calculation of the second estimated torque value $\tau_2$ by the second torque estimation unit 23 is affected by a detection error of the rotor phase $\theta$ of the electric motor 4, it is desirable to use the first estimated torque value $\tau_1$ calculated by the first torque estimation unit 22 as much as possible. However, in the calculation of the first estimated torque value $\tau_1$ by the first torque estimation unit 22, since the winding resistance value R used in the calculation of the copper loss $P_{LR}$ is affected by temperature fluctuation, the torque error ratio $\Delta\tau$ does not become zero. That is, an error due to temperature fluctuation occurs in the first estimated torque value $\tau_1$. In other words, a non-zero torque error ratio $\Delta\tau$ due to temperature fluctuation occurs in the first estimated torque value $\tau_1$.

In the controller 1 according to the first embodiment, the switching unit 24 and the loss change amount calculation unit 25 suppress the torque error ratio $\Delta\tau$ due to temperature fluctuation to the allowable torque error ratio $\Delta\tau_{MAX}$ at a maximum. The operation principle is as follows.

(Operation principle 1) The comparison unit 24b and the switch 24c apply the first torque estimation unit 22 only in the case of "$|\Delta\tau_L| < \Delta\tau_{MAX}$".

(Operation principle 2) The torque error ratio $\Delta\tau$ is expressed by the following Equation (5) by the effect of the torque command correction unit 26.

$$\Delta\tau = (\tau - \tau^*)/\tau^* = (\tau - \tau_{est})/\tau_{est} \ldots (5)$$

Here, "$\tau_{est} = \tau_1$" holds in a range in which the first torque estimation unit 22 is applied. In addition, the following Equation (6) holds based on the above Equations (1) and (2).

$$\tau_{est} = \tau_1 = (P_{in} - P_{LI} - P_{LR})/\omega \ldots (6)$$

Similarly, the following Equation (7) holds for the actual torque $\tau$.

$$\tau = (P_{in} - P_{LI} - P_{LR} - \Delta P_L)/\omega \ldots (7)$$

When Equations (6) and (7) are substituted into Equation (5), the following Equation (8) is obtained.

$$\Delta\tau = (-\Delta P_L)/(P_{in} - P_{LI} - P_{LR}) = -\Delta P_L/P_{OUT} \ldots (8)$$

From the above, it can be understood that "$\Delta\tau = -\Delta\tau_L$".

(Operation principle 3) Based on the above (1) and (2), the first torque estimation unit 22 is applied only in the case of "$|\Delta\tau_L| < \Delta\tau_{MAX}$", that is, "$|\Delta\tau| < \Delta\tau_{MAX}$". Therefore, when the first torque estimation unit 22 is applied, the torque error ratio $\Delta\tau$ due to temperature fluctuation does not exceed the allowable torque error ratio $\Delta\tau_{MAX}$, and when the torque error ratio $\Delta\tau$ exceeds the allowable torque error ratio $\Delta\tau_{MAX}$, switching is automatically made to the second torque estimation unit 23. The second torque estimation unit 23 is affected by the detection error of the rotor phase $\theta$ of the electric motor 4, but is not affected by the winding resistance fluctuation $\Delta R$ due to temperature fluctuation, and is therefore robust against temperature fluctuation.

According to the above-described embodiment, the following operational effects are obtained.

(1) The arithmetic device 11 calculates the output $P_{out}$ of the electric motor 4, calculates the loss change amount $\Delta P_L$

due to temperature change of the electric motor 4, when the absolute value $|\Delta\tau_L|$ of the ratio $\Delta\tau_L$ of the loss change amount to the output $P_{out}$ of the electric motor 4 is smaller than the allowable torque error ratio $\Delta\tau_{MAX}$ of the electric motor 4, sets the first estimated torque value $\tau_1$ based on the output $P_{out}$ of the electric motor 4 and on the frequency $\omega$ (rotation speed) of the electric motor 4 as the estimated torque value $\tau_{est}$ of the electric motor 4, and when otherwise, sets the second estimated torque value $\tau_2$ based on the U-phase, V-phase, and W-phase currents $i_u$, $i_v$, and $i_w$ (currents of the electric motor 4) of the power conversion device 3 and on the rotor phase $\theta$ of the electric motor 4 as the estimated torque value $\tau_{est}$ of the electric motor 4. With this configuration, the torque error ratio due to the influence of temperature fluctuation can be suppressed to an allowable value or less.

(2) The arithmetic device 11 sets, as the input $P_{in}$ of the electric motor 4, an inner product of the U-phase, V-phase, and W-phase voltages $v_u$, $v_v$, and $v_w$ of the power conversion device 3 and the U-phase, V-phase, and W-phase currents $i_u$, $i_v$, and $i_w$ of the power conversion device 3 (output of the power conversion device 3), and sets, as the output $P_{out}$ of the electric motor 4, the value obtained by subtracting the loss $P_{LI}$ of the electric motor 4 from the input $P_{in}$ to the electric motor 4. With this configuration, the output $P_{out}$ of the electric motor 4 can be calculated in consideration of a loss of the electric motor 4 such as a copper loss.

(3) The arithmetic device 11 calculates the loss change amount $\Delta P_L$ based on a value obtained by adding the offset value b to a product $a\omega^m i^n$ of a power multiplier $i^n$ of the current of the electric motor 4 and a power multiplier $\omega^m$ of the frequency of the electric motor 4. With this configuration, it is possible to calculate, by a simple calculation, a copper loss that accounts for most of the influence of temperature fluctuation. Since a simple calculation is sufficient, the amount of calculation is reduced, and power consumption can be reduced.

(4) The arithmetic device 11 sets as the loss change amount $\Delta P_L$ a product of the winding resistance fluctuation $\Delta R$, which is a change amount of the winding resistance value R due to the temperature change of the electric motor 4, and a square $i^2$ of the current of the electric motor 4. With this configuration, the loss change amount $\Delta P_L$ can be calculated with a low calculation amount.

(5) The arithmetic device 11 sets as the first estimated torque value $\tau_1$ a value obtained by dividing the output $P_{out}$ of the electric motor 4 by the frequency $\omega$ (rotation speed) of the electric motor 4. With this configuration, when the temperature fluctuation is not severe, the first torque estimation unit 22 can stably obtain a highly accurate estimated torque value.

(6) The arithmetic device 11 converts the U-phase, V-phase, and W-phase currents $i_u$, $i_v$, and $i_w$ (three-phase AC currents) of the power conversion device 3 of the electric motor 4 into the d-axis and q-axis currents $i_d$ and $i_q$ from three-phases to two-phases by using the rotor phase $\theta$ of the electric motor 4, and calculates the second estimated torque value $\tau_2$ based on the d-axis and q-axis currents $i_d$ and $i_q$, on the d-axis inductance $L_d$ and the q-axis inductance $L_q$ of the electric motor 4, and on the induced voltage coefficient $K_e$ of the electric motor 4. With this configuration, when the temperature fluctuation is severe, the second torque estimation unit 23 can stably obtain a highly accurate estimated torque value.

(7) The arithmetic device 11 corrects the torque command $\tau^*$ that is input to the controller 1, based on the estimated torque value $\tau_{est}$ of the electric motor 4, and outputs the gate signals g (PWM control signal) to the power conversion device 3 based on the corrected corrected torque command $\tau^{**}$. With this configuration, the power conversion device 3 can be stably controlled at a desired torque.

(8) The arithmetic device 11 is a two-degree-of-freedom control system in which the estimated torque value $\tau_{est}$ is used as feedback and the torque command $\tau^*$ is used as feedforward. With this configuration, even when the first torque estimation unit 22 and the second torque estimation unit 23 are switched, an estimation result is not unstable, and high estimation accuracy can be maintained in a steady state.

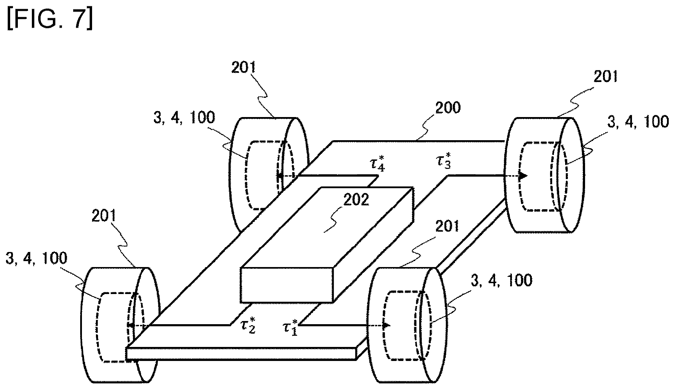

With reference to FIG. 7, a controller according to a second embodiment of the present invention will be described. Components that are the same as or correspond to the components described in the first embodiment will be denoted by the same reference signs, and differences will be mainly described.

FIG. 7 is a schematic diagram illustrating an electric motor vehicle 200 on which a controller 100 according to the second embodiment is mounted. The electric motor vehicle 200 is an electric motor vehicle using the electric motors 4 as a drive source. That is, the electric motor vehicle 200 includes the four electric motors 4, and each electric motor 4 is connected to one of axles of four wheels 201 included in the electric motor vehicle 200. For each of the four electric motors 4, its corresponding controller 100 and power conversion device 3 are prepared.

The electric motor vehicle 200 includes a controller (hereinafter, also referred to as an electric motor vehicle controller) 202 that controls each unit of the electric motor vehicle 200. The electric motor vehicle controller 202 corresponds to the torque command input device 2 described in the first embodiment. That is, the electric motor vehicle controller 202 outputs torque commands $\tau_1^*$, $\tau_2^*$, $\tau_3^*$, and $\tau_4^*$ for accelerating and decelerating the electric motor vehicle 200, to the respective four controllers 100. Since the electric motor vehicle 200 is operated under a wide range of conditions from a low speed to a high speed, the temperature of each electric motor 4 constantly fluctuates, but the controllers 100 according to the second embodiment can suppress the torque error ratios $\Delta\tau$ to be equal to or less than the allowable torque

error ratio $\Delta\tau_{MAX}$. Therefore, the electric motor vehicle 200 can be stably accelerated and decelerated.

The following modifications are also within the scope of the present invention, and it is also possible to combine the configuration illustrated in the modification with the configuration described in the above-described embodiments, and it is also possible to combine the configurations described in the above-described different embodiments or to combine the configurations described in the following different modifications.

<Modification 1>

The operation of the torque command correction unit 26 may be different from that described in FIG. 3. For example, the estimated torque value $\tau_{est}$ may be used as it is as the corrected torque command $\tau^{**}$. Also in this case, torque estimation can be accurately performed in a steady state. However, the output vibrates at the time of switching between the first torque estimation unit 22 and the second torque estimation unit 23, and there is a possibility that the output becomes unstable transiently.

<Modification 2>

The input $P_{in}$ of the electric motor 4 may be obtained not by the inner product of the U-phase, V-phase, and W-phase voltages vu, vv, and vw of the power conversion device 3 and the U-phase, V-phase, and W-phase currents iu, iv, and iw of the power conversion device 3 but by a product of the input of the power conversion device 3 and a power conversion efficiency of the power conversion device 3.

Although the embodiments of the present invention have been described above, the above embodiments merely illustrate a part of the application example of the present invention, and the technical scope of the present invention is not intended to be limited to the specific configuration of the above embodiments.

Reference Signs List

1, 100 controller
2 torque command input device
3 power conversion device
4 electric motor
11 arithmetic device
12 nonvolatile memory
13 volatile memory
14 input/output interface
21 electric motor output calculation unit
22 first torque estimation unit
23 second torque estimation unit
24 switching unit
25 loss change amount calculation unit
26 torque command correction unit
27 vector control unit
28 PWM control unit
200 electric motor vehicle
201 wheel
202 electric motor vehicle controller

**Claims**

1. A controller for a power conversion device that drives an electric motor, the controller comprising:
   an arithmetic device, the arithmetic device configured to:

   calculate an output of the electric motor;
   calculate a loss change amount due to a temperature change of the electric motor;
   when a ratio of the loss change amount to the output of the electric motor is smaller than an allowable torque error ratio of the electric motor, set a first estimated torque value based on the output of the electric motor and on a rotation speed of the electric motor as an estimated torque value of the electric motor; and when otherwise, set a second estimated torque value based on a current of the electric motor and a rotor phase of the electric motor as the estimated torque value of the electric motor.

2. The controller for a power conversion device according to claim 1, wherein the arithmetic device sets, as an input to the electric motor, a product of an input to the power conversion device and a conversion efficiency or an output of the power conversion device, and sets as an output of the electric motor a value obtained by subtracting a loss of the electric motor from the input to the electric motor.

3. The controller for a power conversion device according to claim 2, wherein the arithmetic device calculates the loss change amount based on a value obtained by adding an offset value to a product of a power multiplier of the current of the electric motor and a power multiplier of a frequency of the motor.

4. The controller for a power conversion device according to claim 1, wherein the arithmetic device sets as the loss change amount a product of a change amount of a winding resistance value due to the temperature change of the electric motor and a square of the current of the electric motor.

5. The controller for a power conversion device according to claim 1, wherein the arithmetic device sets as the first estimated torque value a value obtained by dividing the output of the electric motor by the rotation speed of the electric motor.

6. The controller for a power conversion device according to claim 1, wherein the arithmetic device converts three-phase AC currents of the electric motor into d-axis and q-axis currents from three-phases to two-phases by using the rotor phase of the electric motor, and calculates the second estimated torque value based on the d-axis and q-axis currents, on an inductance of the electric motor, and on an induced voltage coefficient of the electric motor.

7. The controller for a power conversion device according to claim 1, wherein the arithmetic device corrects a torque command that is input to the controller, based on the estimated torque value of the electric motor, and outputs a PWM control signal to the power conversion device based on the corrected torque command.

8. The controller for a power conversion device according to claim 7, wherein the arithmetic device is a two-degree-of-freedom control system in which the estimated torque value is used as feedback and the torque command is used as feedforward.

9. The controller for a power conversion device according to claim 1, wherein a torque command is input from a controller of an electric motor vehicle using the electric motor as a drive source.

[FIG. 1]

[FIG. 2]

[FIG. 3]

[FIG. 4]

[FIG. 5]

[FIG. 6]

```
                        ┌─────────────────┐
                        │      START      │
                        └────────┬────────┘
                                 ↓
                ┌─────────────────────────────┐  S80
                │    CALCULATE OUTPUT P_out    │
                └──────────────┬──────────────┘
                               ↓
                ┌─────────────────────────────┐  S90
                │        CALCULATE LOSS        │
                │    CHANGE AMOUNT ΔP_L        │
                └──────────────┬──────────────┘
                               ↓
                ┌─────────────────────────────┐  S100
                │  CALCULATE RATIO Δτ_L OF     │
                │     LOSS CHANGE AMOUNT       │
                └──────────────┬──────────────┘
                               ↓
```

S110

YES        $|\Delta \tau_L| < \Delta \tau_{MAX}$ ?        NO

| CALCULATE FIRST ESTIMATED TORQUE VALUE $\tau_1$ | S120 | CALCULATE SECOND ESTIMATED TORQUE VALUE $\tau_2$ | S140 |

| OUTPUT FIRST ESTIMATED TORQUE VALUE $\tau_1$ AS ESTIMATED TORQUE VALUE $\tau_{est}$ | S130 | OUTPUT SECOND ESTIMATED TORQUE VALUE $\tau_2$ AS ESTIMATED TORQUE VALUE $\tau_{est}$ | S150 |

| OUTPUT CORRECTED TORQUE COMMAND $\tau**$ | S160 |

| CALCULATE U-PHASE, V-PHASE, AND W-PHASE VOLTAGE COMMANDS $v_u*$, $v_v*$, AND $v_w*$ | S170 |

| OUTPUT GATE SIGNALS g TO POWER CONVERSION DEVICE 3 | S180 |

END

[FIG. 7]

## INTERNATIONAL SEARCH REPORT

| International application No. |
|---|
| **PCT/JP2024/017261** |

**A.    CLASSIFICATION OF SUBJECT MATTER**

*H02P 21/20*(2016.01)i; *H02P 27/08*(2006.01)i
FI:    H02P21/20; H02P27/08

According to International Patent Classification (IPC) or to both national classification and IPC

**B.    FIELDS SEARCHED**

Minimum documentation searched (classification system followed by classification symbols)

H02P21/20; H02P27/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2018-93642 A (TOYO ELECTRIC MFG. CO., LTD.) 14 June 2018 (2018-06-14) entire text, all drawings | 1-9 |
| A | JP 2016-187250 A (MITSUBISHI ELECTRIC CORPORATION) 27 October 2016 (2016-10-27) entire text, all drawings | 1-9 |
| A | JP 2020-167870 A (HITACHI, LTD.) 08 October 2020 (2020-10-08) entire text, all drawings | 1-9 |
| A | JP 2015-133891 A (NISSAN MOTOR CO., LTD.) 23 July 2015 (2015-07-23) entire text, all drawings | 1-9 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **05 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/017261**

| Patent document cited in search report | Publication date (day/month/year) | Patent family member(s) | Publication date (day/month/year) |
|---|---|---|---|
| JP 2018-93642 A | 14 June 2018 | (Family: none) | |
| JP 2016-187250 A | 27 October 2016 | (Family: none) | |
| JP 2020-167870 A | 08 October 2020 | EP 3950403 A1 entire text, all drawings WO 2020/202655 A1 CN 113646204 A | |
| JP 2015-133891 A | 23 July 2015 | US 2015/0198491 A1 entire text, all drawings EP 2894782 A1 CN 104779877 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002233199 A